# EUROPEAN PATENT SPECIFICATION

(11) **EP 2 875 711 B1**
(45) Date of publication and mention of the grant of the patent: **11.01.2017**
(21) Application number: 13193817.7
(22) Date of filing: 21.11.2013
(51) Int. Cl.: A01D 34/78, A01D 34/81, A01D 69/02

(54) **Lawnmower electronics housing**
Rasenmäherelektronikgehäuse
Boîtier électronique de tondeuse à gazon

(43) Date of publication of application: 27.05.2015
(73) Proprietor: ROBERT BOSCH GMBH, 70442 Stuttgart (DE)
(72) Inventor: Ling, Matthew, IP6 8QR Ipswich Suffolk (GB); Koepf, Christian, IP92BA Wherstead (GB)

(56) References cited:
- EP-A1- 0 003 637
- EP-A1- 1 285 567
- DE-U1- 29 513 479

## Description

The present invention relates to a lawnmower and in particular to a lawnmower comprising an electronics housing.

EP 1 285 567 A1 discloses a lawnmower comprising a chassis including a cutting chamber, a cutting blade rotatably mounted within the cutting chamber, and an electric motor mounted to the chassis above the cutting chamber which in use drives the cutting blade, wherein an aperture is provided between the chassis and the motor to allow air to be drawn into the cutting chamber, the lawnmower further comprising an electronics housing mounted above the motor, the base of the housing forming a heat sink for the electronic components in the housing which is cooled by air drawn into the cutting chamber through the aperture.

Existing designs of electric lawnmower (whether mains or battery powered) usually have the control electronics mounted in or around the motor, typically with a finishing cover placed over the top to provide some element of protection to the components and to give the lawnmower its overall aesthetic design.

The proximity of the electronics to the motor and the presence of the cover combine in prior art designs to expose the electronics to dirt, dust, water, vibration and heat. Rather than protect the electronics, the cover can in fact trap dust and dirt underneath, which exacerbates the problem of heat since airflow becomes even more restricted.

In accordance with the invention, there is provided a lawnmower comprising a chassis including a cutting chamber, a cutting blade rotatably mounted within the cutting chamber, and an electric motor mounted to the chassis above the cutting chamber which in use drives the cutting blade, wherein an aperture is provided between the chassis and the motor to allow air to be drawn into the cutting chamber, the lawnmower further comprising an electronics housing mounted above the motor, the base of the housing forming a heat sink for the electronic components in the housing which is cooled by air drawn into the cutting chamber through the aperture and the motor includes a motor casing to which the housing is mounted.

A particularly preferred feature of the present invention is the absence of a separate cover over the major components (motor, electronics housing, battery if fitted, etc.) in use. Preferably therefore the top surface of the electronics housing is substantially uncovered in use and open to air.

The housing is preferably mounted directly above the motor. The housing is preferably mounted to the motor casing by means of a plurality of mounting posts which space the base of the housing from the motor casing. This provides further air circulation between the components and provides improved cooling for both. A plurality of apertures between the chassis and the motor may be provided, and they may be spaced circumferentially around the motor so that the housing base is cooled from a number of sides.

In order to provide protection from vibration and shock, the housing is preferably mounted to the motor casing via resilient bushes, such as rubber or silicone bushes.

The housing base is preferably formed of metal such as aluminium to optimise its function as a heat sink. The electronic components may be mounted in one or more sub-assemblies which are rigidly mounted to the housing base. Each sub-assembly may include an aluminium base or housing to conduct heat from the electronic components to the housing base. A thermal transfer medium may be mounted between the sub-assembly and the housing base to promote heat transfer to the base.

The electronics housing preferably has a cover which is attached to the base (permanently or removably). A seal is preferably formed at the interface of the base and cover to prevent water or dust ingress. A gasket is preferably provided to improve the reliability of the seal.

As mentioned above, the electronics housing is preferably mounted directly above the motor. In such an arrangement, it may be desirable to pass one or more electrical wires or cables, for example to provide power and/or control signals to the motor, vertically downwards through the housing base rather than emerging horizontally at the join between the base and the cover. For this purpose, an aperture in the base will be necessary. If such an aperture is present in the housing base, a seal or grommet is preferably provided in the aperture between the wire and the housing base to maintain the protection of the interior space of the housing. The seal is preferably resilient. If more than one wire needs to pass through the aperture, the seal may be provided with a plurality of apertures.

A particularly preferred form of seal comprises a resilient body with at least one cylindrical passage therethrough for receiving a wire, and a slit extending from the cylindrical passage to an outer surface of the resilient body, the slit running the full depth of the body so as to allow the insertion of the wire into the passage in a radial direction.

In one embodiment, the seal may be resiliently deformable to open the slit and facilitate insertion of the wire. In another embodiment, the seal is resiliently deformable to close the slit and seal around the wire. In this second arrangement, the seal may be manufactured (e.g. moulded) with the slit in an open configuration, for example by forming the seal in a curve, which, after insertion of the wire, is resiliently deformed to a closed configuration, for example by straightening the curve. The aperture in the housing or base is preferably substantially the same shape as the closed configuration and maintains the seal in that form, against the resilient biasing force which would tend towards the curved form. The seal may have a plurality of passages and corresponding slits, to accommodate a plurality of individual wires or cables.

The seal preferably has a tapered profile in the axial direction of the cylindrical passage, which is also the direction of insertion of the seal into the housing base aperture. The aperture preferably has a corresponding tapered profile such that, when the seal is retained in the aperture and is subject to a retaining force, the seal is compressed in the radial direction of the passages, thereby providing a secure seal.

The lawnmower of the present invention may be mains-powered but is preferably battery-powered. Preferably the one or more batteries are removable and rechargeable.

In at least its preferred embodiments, the present invention provides an electronics housing for a lawnmower which will encounter lower levels of dirt, dust, water, vibration and heat than prior art designs. This will improve the reliability of the electronics. With the absence of a decorative cover, the lawnmower of the present invention is less complex in construction and the cost of a relatively bulky component is avoided. The major components of the lawnmower are readily accessible for maintenance and repair.

An embodiment of the invention will now be described by way of example only and with reference to the accompanying drawings, in which:
Fig. 1 shows a perspective view of a lawnmower in accordance with the invention;
Fig. 2 shows an exploded perspective view of the lawnmower of Fig. 1;
Fig. 3 shows an exploded, detailed view of the electronics housing;
Fig. 4 shows a perspective view of a cable seal suitable for use in the present invention, in a curved, open configuration; and
Fig. 5 shows a perspective view of the seal of Fig. 4 in a straight, closed configuration.

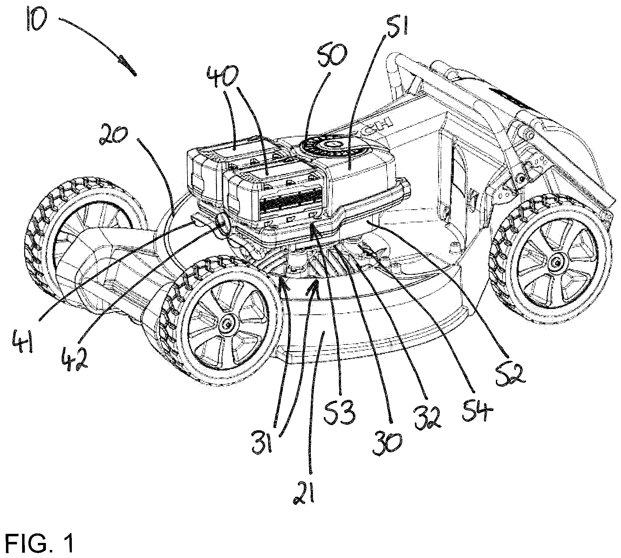

With reference to Fig. 1, a lawnmower 10 is shown. The main lawnmower components relevant to the invention are chassis 20, electric motor 30, batteries 40 and electronics housing 50.

Chassis 20 defines a cutting chamber 21 within which a cutting blade (not shown) is rotatably mounted. Motor 30 is mounted to the chassis directly above the cutting chamber and drives the cutting blade within the cutting chamber in use. Apertures 31 are provided between the motor 30 and the chassis 20 so that air can be drawn into the cutting chamber by the action of the cutting blade. Protective fins 32 prevent objects of a predetermined size from being inserted in or drawn into the apertures 31.

Electronics housing 50 comprises a plastics cover 51 and an aluminium base 52. A sealing gasket (not shown) is provided between the cover and base. The cover and base extend forwards to provide a docking platform 53 for two rectangular batteries 40 which can be removed from the lawnmower for replacement or recharging by operating latch mechanism 41. A battery isolator key 42 is also provided.

Base 52 is mounted onto the motor 30 by means of four pillars 54. These serve to space the platform from the motor and to promote airflow around and between these components.

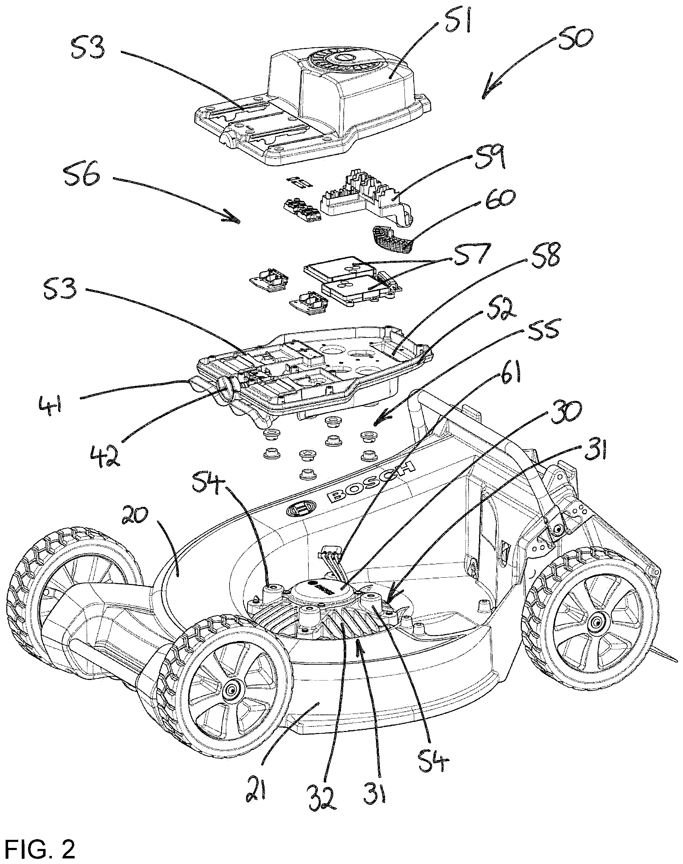

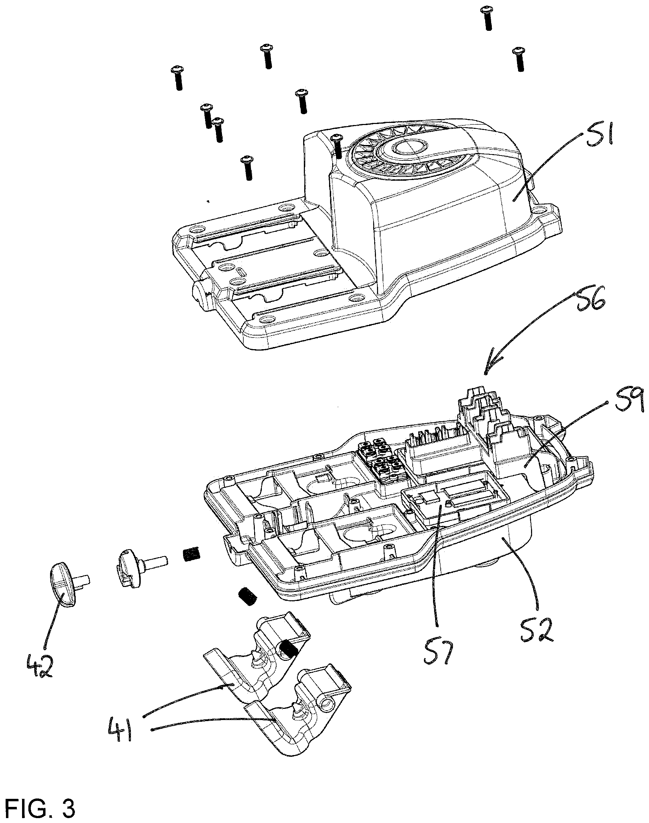

The specific details of the housing and mounting arrangement are shown in Figs. 2 and 3, which are exploded views. The same reference numbers as used above in relation to Fig. 1 are used to refer to the same features in Figs 2 and 3.

In Fig. 2, the motor 30, apertures 31 and protective fins 32 can be seen more clearly. Pillars 54 are located on the motor casing and support housing base 52. Resilient mountings or bushes 55 are located between the pillars 54 and base 52 to reduce transmission of vibration and shock to the electronics.

With reference to Figs. 2 and 3, contained within electronics housing 50 are the various electrical sub-assemblies and components 56, including electronic components, circuits, terminals, clamps, wires and connectors. The electronics themselves are potted and screwed into aluminium housings to form sub-assemblies 57. These housings are then rigidly mounted to the aluminium base 52 with a thermal transfer medium (not shown) in between to ensure good heat conduction.

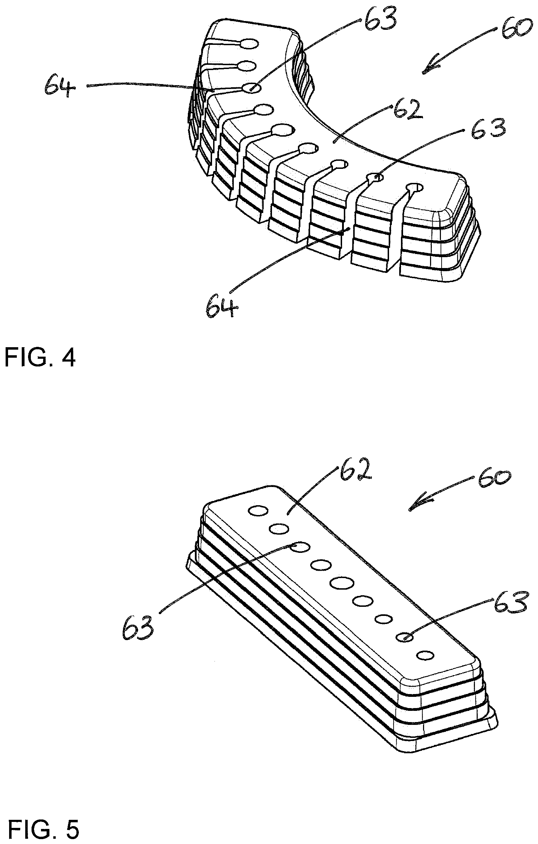

A seal 60 for cable 61 is also shown in Fig. 2. The seal is shown in more detail in Figs. 4 and 5, although for clarity, these figures show the seal rotated by 180 degrees and the views are of the underside.

In Fig. 4, the seal is shown in its relaxed form as manufactured and without any biasing forces being applied. Seal 60 is made of a resilient material such as rubber or silicone. Seal 60 comprises a generally elongate body 62 having a plurality of cylindrical cable passages 63 extending from the top side to the bottom side. In its relaxed form, the body has a generally curved profile. As can be seen from the figure, the seal has a tapered cross-section, which may be stepped as shown or smooth. The seal is tapered in the axial direction of the passages 63, which is also the direction of insertion of the seal into aperture 58 (Fig. 2).

A slit 64 from each passage 63 to the outer edge of the elongate body is provided. This slit runs the full depth of the body and allows the insertion of the wire into the cylindrical passage 63 in a radial direction rather than along the axis of the cylindrical passage.

The seal body 62 is resiliently deformable into the straight configuration of Fig. 5. In this rectangular form, slits 64 are closed and the wires placed in cylindrical passages 63 are resiliently gripped so that a good seal is made around each wire. The seal is held in the straight, rectangular configuration by the shape of aperture 58 (Fig. 2), which is also rectangular. The aperture 58 is provided with a tapering wall which matches the taper of the seal so that when the seal is inserted into the aperture 58 from above, narrow face first, it can be securely held in the straight configuration. Retaining component 59 clamps the seal in the tapered aperture 58, the two tapers causing compression of the seal in the radial direction of the passages 63 and providing a good water seal.

## Claims

1. A lawnmower (10) comprising a chassis (20) including a cutting chamber (21), a cutting blade rotatably mounted within the cutting chamber (21), and an electric motor (30) mounted to the chassis (20) above the cutting chamber (21) which in use drives the cutting blade, wherein an aperture (31) is provided between the chassis (20) and the motor (30) to allow air to be drawn into the cutting chamber (21), the lawnmower (10) further comprising an electronics housing (50) mounted above the motor (30), the base of the housing (52) forming a heat sink for the electronic components in the housing (50) which is cooled by air drawn into the cutting chamber (21) through the aperture (31), **characterized in that**, the motor (30) includes a motor casing to which the housing (50) is mounted.

2. The lawnmower (10) of claim 1, in which the top surface of the electronics housing (50) is substantially uncovered in use and open to air.

3. The lawnmower (10) of claim 2, in which the housing (50) is mounted to the motor casing by means of a plurality of mounting posts (54) which space the base of the housing (52) from the motor casing.

4. The lawnmower (10) of claim 2 or 3, in which the housing (50) is mounted to the motor casing via resilient bushes (55).

5. The lawnmower (10) of any preceding claim, in which the base of the housing (52) is formed of metal, such as aluminium.

6. The lawnmower (10) of any preceding claim, in which a plurality of apertures (31) between the chassis (20) and the motor (30) are provided, spaced circumferentially around the motor (30).

7. The lawnmower (10) of any preceding claim, in which the electronic components are mounted in one or more sub-assemblies (57) which are rigidly mounted to the housing base (52).

8. The lawnmower (10) of claim 7, in which the or each sub-assembly (57) includes an aluminium base (52) or housing to conduct heat from the electronic components to the housing base (52).

9. The lawnmower (10) of claim 7 or 8, in which a thermal transfer medium is mounted between the sub-assembly (57) and the housing base (52) to promote heat transfer to the base.

10. The lawnmower (10) of any preceding claim, in which the housing (50) has a cover (51) which is attached to the base (52) and forms a seal (60) at the interface.

11. The lawnmower (10) of claim 10, in which a gasket is provided between the cover (51) and the base (52).

12. The lawnmower (10) of any preceding claim, in which the housing (50) further comprises a seal (60) for a wire passing out of the housing (50), the seal (60) comprising a resilient body with at least one cylindrical passage (63) therethrough for receiving the wire, and a slit (64) extending from the cylindrical passage (63) to an outer surface of the resilient body, the slit (64) running the full depth of the body so as to allow the insertion of the wire into the passage (63) in a radial direction.

13. The lawnmower (10) of claim 12, in which the seal is formed with the slit (64) in an open configuration and is resiliently deformable to close the slit (64) and form a seal around the wire.

14. The lawnmower (10) of claim 12 or 13, in which the wire passes out of the housing (50) through an aperture (58) in the housing base (52) and the seal (60) is provided in the aperture (58) between the wire and the housing base (52), the seal and the aperture (58) having corresponding tapered profiles such that, when the seal (60) is retained in the aperture(58), the seal (60) is compressed in the radial direction of the cylindrical passage (63).

## Patentansprüche

1. Rasenmäher (10), umfassend ein Chassis (20) mit einer Schneidkammer (21), ein innerhalb der Schneidkammer (21) drehbar montiertes Schneidmesser sowie ein am Chassis (20) oberhalb der Schneidkammer (21) montierter Elektromotor (30), der im Gebrauch das Schneidmesser antreibt, wobei eine Öffnung (31) zwischen dem Chassis (20) und dem Motor (30) vorgesehen ist, so dass Luft in die Schneidkammer (21) eingezogen werden kann, wobei der Rasenmäher (10) weiterhin ein oberhalb des Motors (30) montiertes Elektronikgehäuse (50) umfasst, wobei die Basis des Gehäuses (52) einen Wärmeableiter für die Elektronikbauteile im Gehäuse (50) bildet, wobei die Kühlung durch Luft erfolgt, die durch die Öffnung (31) in die Schneidkammer (21) eingezogen wird, **dadurch gekennzeichnet, dass** der Motor (30) ein Motorgehäuse beinhaltet, an dem das Gehäuse (50) montiert ist.

2. Rasenmäher (10) nach Anspruch 1, bei dem die Oberseite des Elektronikgehäuses (50) im Gebrauch im Wesentlichen unbedeckt ist und frei liegt.

3. Rasenmäher (10) nach Anspruch 2, bei dem das Gehäuse (50) am Motorgehäuse mittels mehrerer Montagepfosten (54) montiert ist, die für eine Beabstandung der Basis des Gehäuses (52) vom Motorgehäuse sorgen.

4. Rasenmäher (10) nach Anspruch 2 oder 3, bei dem das Gehäuse (50) über elastische Buchsen (55) am Motorgehäuse montiert ist.

5. Rasenmäher (10) nach einem der vorstehend aufgeführten Ansprüche, bei dem die Basis des Gehäuses (52) aus Metall, beispielsweise Aluminium, besteht.

6. Rasenmäher (10) nach einem der vorstehend aufgeführten Ansprüche, bei dem zwischen dem Chassis (20) und dem Motor (30) mehrere Öffnungen (31) vorgesehen sind, die am Umfang um den Motor (30) herum beabstandet sind.

7. Rasenmäher (10) nach einem der vorstehend aufgeführten Ansprüche, bei dem die Elektronikbauteile in einer oder mehreren Baugruppen (57) montiert sind, die fest an der Gehäusebasis (52) montiert sind.

8. Rasenmäher (10) nach Anspruch 7, bei dem die oder jede Baugruppe (57) eine Aluminiumbasis (52) oder Aluminiumgehäuse beinhaltet, um Wärme von den Elektronikbauteilen zur Gehäusebasis (52) abzuleiten.

9. Rasenmäher (10) nach Anspruch 7 oder 8, bei dem ein Wärmeübertragungsmedium zwischen der Baugruppe (57) und der Gehäusebasis (52) montiert ist, um eine Wärmeübertragung zur Basis zu fördern.

10. Rasenmäher (10) nach einem der vorstehend aufgeführten Ansprüche, bei dem das Gehäuse (50) eine Abdeckung (51) hat, die an der Basis (52) befestigt ist und eine Abdichtung (60) an der Schnittfläche bildet.

11. Rasenmäher (10) nach Anspruch 10, bei dem eine Dichtung zwischen der Abdeckung (51) und der Basis (52) vorgesehen ist.

12. Rasenmäher (10) nach einem der vorstehend aufgeführten Ansprüche, bei dem das Gehäuse (50) weiterhin eine Abdichtung (60) für eine aus dem Gehäuse (50) austretende Leitung umfasst, wobei die Abdichtung (60) einen elastischen Körper mit mindestens einer dadurch verlaufenden zylindrischen Durchführung (63) zur Aufnahme der Leitung umfasst, und wobei ein Schlitz (64) vorgesehen ist, der sich von der zylindrischen Durchführung (63) hin zu einer Außenfläche des elastischen Körpers erstreckt, wobei der Schlitz (64) über die volle Tiefe des Körpers verläuft, so dass die Leitung in einer radialen Richtung in die Durchführung (63) eingeführt werden kann.

13. Rasenmäher (10) nach Anspruch 12, bei dem die Abdichtung mit dem Schlitz (64) in einer offenen Konfiguration ausgebildet und elastisch verformbar ist, um den Schlitz (64) zu verschließen und um die Leitung herum eine Abdichtung zu bilden.

14. Rasenmäher (10) nach Anspruch 12 oder 13, bei dem die Leitung durch eine Öffnung (58) in der Gehäusebasis (52) aus dem Gehäuse (50) austritt und die Abdichtung (60) in der Öffnung (58) zwischen der Leitung und der Gehäusebasis (52) vorgesehen ist, wobei die Abdichtung und die Öffnung (58) entsprechende konisch ausgebildete Profile aufweisen, so dass, wenn die Abdichtung (60) in der Öffnung (58) zurückgehalten wird, die Abdichtung (60) in der radialen Richtung der zylindrischen Durchführung (63) zusammengedrückt wird.

## Revendications

1. Tondeuse à gazon (10) comprenant un châssis (20) qui comprend une chambre de coupe (21), une lame de coupe montée rotative à l'intérieur de la chambre de coupe (21) et un moteur électrique (30) monté sur le châssis (20) au-dessus de la chambre de coupe (21) et qui, en service, entraîne la lame de coupe, dans laquelle est disposée une ouverture (31) entre le châssis (20) et le moteur (30) pour permettre à l'air d'être aspiré dans la chambre de coupe (21), la tondeuse à gazon (10) comprenant en outre un logement (50) pour l'électronique monté au-dessus du moteur (30), la base (52) du logement constituant un dissipateur thermique pour les composants électroniques dans le logement (50) qui est refroidi par l'air aspiré dans la chambre de coupe (21) par l'ouverture (31), **caractérisé en ce que** le moteur (30) comprend une carcasse de moteur sur lequel est monté le logement (50).

2. Tondeuse à gazon (10) selon la revendication 1, dans laquelle la surface supérieure du logement (50) pour l'électronique est pour l'essentiel découverte en service et à l'air libre.

3. Tondeuse à gazon (10) selon la revendication 2, dans laquelle le logement (50) est monté sur la carcasse de moteur au moyen d'une pluralité de montants (54) qui espacent la base (52) du logement de la carcasse de moteur.

4. Tondeuse à gazon (10) selon la revendication 2 ou 3, dans laquelle le logement (50) est monté sur la carcasse de moteur par l'intermédiaire de douilles élastiques (55).

5. Tondeuse à gazon (10) selon l'une quelconque des revendications précédentes, dans laquelle la base (52) du logement est constituée de métal, par exemple de l'aluminium.

6. Tondeuse à gazon (10) selon l'une quelconque des revendications précédentes, dans laquelle une pluralité d'ouvertures (31) entre le châssis (20) et le moteur (30) sont disposées espacées suivant la circonférence autour du moteur (30).

7. Tondeuse à gazon (10) selon l'une quelconque des revendications précédentes, dans laquelle les composants électroniques sont montés dans un ou plusieurs sous-ensembles (57) qui sont solidarisés à la base (52) du logement.

8. Tondeuse à gazon (10) selon la revendication 7, dans laquelle le ou chaque sous-ensemble (57) comprend une base (52) ou un logement en aluminium pour conduire la chaleur des composants électroniques à la base (52) du logement.

9. Tondeuse à gazon (10) selon la revendication 7 ou 8, dans laquelle un médium de transfert thermique est monté entre le sous-ensemble (57) et la base (52) du logement pour favoriser le transfert de chaleur vers la base.

10. Tondeuse à gazon (10) selon l'une quelconque des revendications précédentes, dans laquelle le logement (50) comporte un couvercle (51) qui est fixé à la base (52) et assure une étanchéité (60) au niveau de l'interface.

11. Tondeuse à gazon (10) selon la revendication 10, dans laquelle un joint statique est disposé entre le couvercle (51) et la base (52).

12. Tondeuse à gazon (10) selon l'une quelconque des revendications précédentes, dans laquelle le logement (50) comprend en outre un joint d'étanchéité (60) pour un fil sortant du logement (50), le joint d'étanchéité (60) comprenant un corps élastique ayant au moins un passage cylindrique (63) qui le traverse, pour recevoir le fil, et une fente (64) s'étendant du passage cylindrique (63) à la surface extérieure du corps élastique, la fente (64) courant sur toute la profondeur du corps afin de permettre l'introduction dans une direction radiale du fil dans le passage (63).

13. Tondeuse à gazon (10) selon la revendication 12, dans laquelle le joint d'étanchéité est formé avec la fente (64) dans une configuration ouverte et est élastiquement déformable pour fermer la fente (64) et assurer une étanchéité autour du fil.

14. Tondeuse à gazon (10) selon la revendication 12 ou 13, dans laquelle le fil sort du logement (50) par une ouverture (58) dans la base (52) du logement et le joint d'étanchéité (60) est disposé dans l'ouverture (58) entre le fil et la base (52) du logement, le joint d'étanchéité et l'ouverture (58) présentant des profils coniques correspondants de telle sorte que, quand le joint d'étanchéité (60) est retenu dans l'ouverture (58), le joint d'étanchéité (60) est comprimé dans la direction radiale du passage cylindrique (63).
